# EUROPÄISCHE PATENTSCHRIFT

(11) **EP 1 137 691 B1**
(45) Veröffentlichungstag und Bekanntmachung des Hinweises auf die Patenterteilung: **18.08.2004**
(21) Anmeldenummer: 99948910.7
(22) Anmeldetag: 30.09.1999
(51) Int. Cl.: C08G 77/16

(54) **ORGANOPOLYSILOXANHARZE**
ORGANOPOLYSILOXANE RESINS
RESINES D'ORGANOPOLYSILOXANE

(30) Priorität: 11.12.1998 DE 19857348
(43) Veröffentlichungstag der Anmeldung: 04.10.2001
(73) Patentinhaber: Wacker-Chemie GmbH, 81737 München (DE)
(72) Erfinder: KÖHLER, Thomas, D-84556 Kastl (DE); BLÜML, Walter, D-84359 Simbach (DE)
(74) Vertreter: Fritz, Helmut, Dr.
(86) Internationale Anmeldenummer: PCT/EP1999/007260
(87) Internationale Veröffentlichungsnummer: WO 2000/035994

(56) Entgegenhaltungen:
- EP-A- 0 604 847
- DE-A- 2 415 331
- US-A- 4 877 837

## Beschreibung

Die Erfindung betrifft Organopolysiloxanharze und ihre Herstellung.

Bekannt sind Organopolysiloxanharze mit einer Glasübergangstemperatur (Tg) die bis ca. 55 °C reicht. Diese Organopolysiloxanharze sind jedoch nicht stabil in einer Umgebung, in der diese Temperatur oder eine höhere Temperatur herrscht, da sie dann erweichen und ihre Weiterverarbeitbarkeit nicht mehr gegeben ist. Bekannt sind auch Organopolysiloxanharze mit einer Tg von über 55 °C. Diese haben aber einen OH-Gehalt von deutlich unter 1 Gew.% und damit eine stark erniedrigte Reaktivität.

Es ist daher Aufgabe der Erfindung den Stand der Technik zu verbessern, insbesondere Organopolysiloxanharze mit einer höheren Glasübergangstemperatur (Tg), unter Beibehaltung einer erhöhten Reaktivität, zur Verfügung zu stellen.

Gegenstand der Erfindung sind Organopolysiloxanharze, die eine Glasübergangstemperatur (Tg) von über 60 °C und einen OH-Gehalt von mindestens 1 Gew.% bezogen auf das Organopolysiloxanharz haben.

Bei den Organopolysiloxanharzen handelt es sich um übliche Organopolysiloxanharze, die gemäß dem unten beschriebenen Verfahren hergestellt werden. Die erfindungsgemäßen Organopolysiloxanharze haben eine Glasübergangstemperatur (Tg) von über 60 °C bis vorzugsweise 200 °C und einen OH-Gehalt von mindestens 1 Gew.% bis vorzugsweise 8 Gew.% und ein Molekulargewicht von bevorzugt 500 bis 10000 g/mol und besonders bevorzugt von 1000 bis 8000 g/mol.

Ein weiterer Gegenstand der Erfindung ist ein Verfahren zur Herstellung von Organopolysiloxanharzen, wobei Alkoxysilane, die gleich oder verschieden sein können, der folgenden allgemeinen Formel I:

**R**_{**x**}**Si(OR')**_{**Y**}**,**

wobei
R gleich oder verschieden sein kann und Wasserstoffatom oder organischer Rest bedeuten und R' die Bedeutung von R hat,
x 0 bis 3 und
y 4 bis 1 ist
in Gegenwart von Säure und Wasser umgesetzt werden, wobei in einem ersten Schritt der gebildete Alkohol mit Wasser abdestilliert wird und in einer zweiten Stufe das organischen Lösungsmittel, das einen Siedepunkt über dem des Wasser hat, hinzugefügt wird und später die Säure durch Destillation entfernt wird.

Bevorzugt handelt es sich bei dem Rest R um einen linearen Alkylrest mit 1 bis 18 Kohlenstoffatomen, besonders bevorzugt sind Alkylreste, wie der Methyl-, Ethyl-, n- Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Oktylreste, wie der n-Octylrest und iso-Oktylreste, wie der 2,2,4-Trimethylpentylrest, Nonylreste, wie der n-Nonylrest, Decylreste, wie der n-Decylrest, Dodecylreste, wie der n-Dodecylrest, Oktadecylreste, wie der n-Oktadecylrest; wobei die Alkylreste vorzugsweise mit Mercaptoresten, epoxyfunktionellen Resten, Carboxyresten, Aminoresten, wie dem Aminoethylaminorest, iso-Cyanatoresten, Arcyloxyresten, Methacryloxyresten, Hydroxyresten substituiert sein können; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl-, Naphthyl- und Anthryl- und Phenanthrylrest; Alkarylreste, wie o-, m-, p-Tolylreste, Xylylreste und Ethylphenylreste; Aralkylreste, wie der Benzylrest, der alphaund der β-Phenylethylrest, ganz besonders bevorzugt sind der Methyl- bis Propylrest, bzw. Phenylrest.

R' entspricht hinsichtlich der Definition dem Rest R.

Die Alkoxysilane, die gleich oder verschieden sein können, werden bevorzugt stöchiometrisch molar eingesetzt. Bevorzugt sind dabei Mengenverhältnisse des Alkoxysilans RSi(OR')₃ von mehr als 50 mol%, als eines der Alkoxysilane, wobei R Phenyl und R' Ethyl bedeutet. Das weitere oder die weiteren Alkoxysilane können dann beliebige sein, die mittels der Formel I beschrieben sind.

Als Säuren können vorzugsweise Mineralsäuren, wie Salzsäure, Schwefelsäure, Salpetersäure oder Phosphorsäure, wobei Salzsäure bevorzugt ist, Polysäuren, wie Polyphosphorsäure, Polyacrylsäure und Polyvinylschwefelsäure oder es können auch vorzugsweise Carbonsäuren wie Ameisensäure, Essigsäure, Propionsäure, Oxalsäure, Malonsäure, Bernsteinsäure, Adipinsäure, Benzoesäure, Phthalsäure, Zitronensäure in Mengen von 1 ppm bis 1 Gew.% bevorzugt kleiner 0,1 Gew.% bezogen auf das gesamte Gewicht der Zusammensetzungen, verwendet werden.

Wasser wird bezogen auf die zu hydrolysierenden Alkoxygruppen in einer molaren Menge von 0,1 bis 10, bevorzugt 0,5 bis 2 eingesetzt.

Als organisches Lösungsmittel, das einen Siedepunkt über dem von Wasser hat, werden vorzugsweise aromatische Kohlenwasserstoffe wie Toluol und Xylol oder Mischungen linearer und/oder verzweigter, gegebenenfalls substituierter Kohlenwasserstoffe, wie Oktan, Nonan und Dekan, bzw. Pentanon, Hexanon, Heptanon, usw. oder deren Isomere oder in Mengen von 1 bis 1000 Gew.% bevorzugt 10 bis 100 Gew.% bezogen auf das gesamte Gewicht der Zusammensetzungen, verwendet.

Die Herstellung der erfindungsgemäßen Organopolysiloxanharze wird vorzugsweise bei Temperaturen von 20 bis 190°C, bevorzugt 40 und 150°C und vorzugsweise einem Druck von 500 bis 10000 hPa (abs.), bevorzugt 950 bis 6000 hPa (abs.) besonders bevorzugt bei leicht vermindertem Druck von etwa 950 hPa (abs.) durchgeführt.

Die Herstellung der erfindungsgemäßen Organopolysiloxanharze kann vorzugsweise kontinuierlich oder bevorzugt nach einem diskontinuierlichen Verfahren erfolgen, wobei bei dem diskontinuierlichen Verfahren in einem ersten Schritt der gebildete Alkohol mit Wasser abdestilliert wird und in einer zweiten Stufe das organischen Lösungsmittel, das einen Siedepunkt über dem des Wasser hat, hinzugefügt wird und später die Säure durch Destillation entfernt wird.

Bei der kontinuierlichen Herstellung finden Hydrolyse mit Wasser und Kondensation der Organoalkoxysilane der allgemeinen Formel I gleichzeitig statt. Im geschlossenen Umlaufsystem wird das Reaktionsgemisch vorzugsweise durch eine Pumpe umgewälzt. Kontinuierlich zugeführt werden Frischwasser und die Organoalkoxysilane, sowie der saure Katalysator. Aus dem Prozeß werden ebenfalls kontinuierlich ein entsprechender Teil der Reaktionsmischung aus Organopolysiloxanen der oben beschriebenen allgemeinen Formel I und der bei der Reaktion gebildete Alkohol, sowie Wasser und der saure Katalysator abgeführt. Nachdem ein Teil des Azeotrops (Alkohol und Wasser) abdestilliert wurde, fügt man eine ausreichende Menge eines organischen Lösungsmittels hinzu und destilliert den im Reaktionsgemisch verbliebenen Alkohol zusammen mit dem vorgelegten Wasser und dem sauren Hydrolysekatalysator aus dem Reaktionsgemisch ab. Man erhält eine Lösung eines hochmolekularen Organopolysiloxans in einem organischen Lösungsmittel. Anschließend kann - falls gewünscht - das organische Lösungsmittel durch Destillation oder Sprühtrocknung vollständig entfernt werden.

Bei der diskontinuierlichen Herstellung wird eine Mischung der bevorzugten Organoalkoxysilane mit Wasser versetzt und mit dem sauren Hydrolysekatalysator vorgelegt. Anschließend erwärmt man das Reaktionsgemisch auf eine zur Reaktion ausreichende Temperatur. Nach einiger Zeit erfolgt der Reaktionsbeginn und der bei der Reaktion gebildete Alkohol wird zusammen mit dem vorgelegten Wasser azeotrop abdestilliert. Nachdem ein Teil des Azeotrops abdestilliert wurde, wird eine ausreichende Menge eines organischen Lösungsmittel hinzugefügt und destilliert den im Reaktionsgemisch verbliebenen Alkohol zusammen mit dem vorgelegten Wasser und dem sauren Hydrolysekatalysator aus dem Reaktionsgemisch ab. Man erhält eine Lösung eines hochmolekularen Organopolysiloxans in einem organischen Lösungsmittel. Anschließend kann - falls gewünscht - das organische Lösungsmittel durch Destillation oder Sprühtrocknung vollständig entfernt werden.

Die erfindungsgemäßen oder erfindungsgemäß hergestellten Organopolysiloxanharze können für alle Zwecke eingesetzt werden, für die auch bisher Organopolysiloxanharze verwendet werden, beispielsweise als Bindemittel zur Herstellung von Überzügen (Beschichtungen) oder Lacken (Pulverlacken), die sich aufgrund ihrer erhöhten Reaktivität gut verarbeiten lassen. Die erfindungsgemäßen Organopolysiloxanharze haben den Vorteil daß sie sich auch bei erhöhten Umgebungstemperaturen von über 55 °C noch gut verarbeiten lassen, da sie nicht zusammenschmelzen. Das erfindungsgemäße Verfahren hat insbesondere den Vorteil, daß keine Filtration notwendig ist, da keine Salze entstehen.

### Beispiele

Die Anlage zur diskontinuierlichen Herstellung der erfindungsgemäßen Organopolysiloxanharze besteht aus einem 2 Liter Vierhalsrundkolben, der mit einem Innenthermometer, einem Rückflußkühler und einer Destillationsbrücke mit Destillatsammler, sowie einem Rührorgan versehen ist. Die Beheizung des Kolbens wird durch einen Heizpilz gewährleistet. Nach erfolgter Umsetzung wird das Reaktionsgemisch gegebenenfalls am Rotationsverdampfer unter vermindertem Druck vom Lösungsmittel vollständig befreit.

### 1. Beispiel:

In der oben beschriebenen Apparatur werden 1120 g Phenyltriethoxysilan, sowie 300 g Wasser und 4,2 g einer 20 %igen Salzsäure vorgelegt. Anschließend wird das Reaktionsgemisch auf Rückflußtemperatur erwärmt und ein Teil des bei der Hydrolyse-/Kondensationsreaktion gebildeten Alkohols zusammen mit einem Teil des vorgelegten Wassers abdestilliert. Nach Zugabe von 400 g Toluol destilliert man bis zu einer Kopftemperatur von 110°C aus. Das erhaltene Rohprodukt wird anschließend am Rotationsverdampfer bei 150°C und 10 mbar vollständig vom Lösungsmittel befreit.

### Weitere Bespiele:

Die übrigen in der Tabelle aufgeführten Beispiele wurden analog der oben aufgeführten Vorschrift hergestellt, jedoch unter Einsatz einer abweichenden Ausgangsalkoxysilans bzw. einer entsprechenden Alkoxysilanmischung, wobei sich die in der Tabelle angegebenen Verhältnisse der Alkoxysilane auf die molar eingesetzten Mengen beziehen. Weiterhin wurden unterschiedliche organische Lösungsmittel anstelle von Toluol verwendet und ebenfalls abweichende Mengen an saurem Katalysator eingesetzt.

| Beispiel | 1 | 2 | 3 | 4 | 5 | 6 | 7 | 8 |
|---|---|---|---|---|---|---|---|---|
| Alkoxysilan | PTEO | PTEO | PTEO | PTEO | PTEO | PTEO | PTEO | PTEO |
| | - | - | - | - | PrTEO | MTEO | MTEO | TES |
| | - | - | - | - | - | - | M2DEO | - |
| Verhältnis | - | - | - | - | 8:2 | 9:1 | 5:4:1 | 9:1 |
| Wasser | 300 g | 300 g | 300 g | 300 g | 320 g | 300 g | 450 g | 450 g |
| HCl (20%ig) | 4,3 g | 2,1 g | 4,3 g | 4,2 g | 4,3 g | 4,2 g | 0,7 g | 2,4 g |
| Org. LM | Toluol | Toluol | Xylol | MIBK | Xylol | Toluol | Toluol | Toluol |
| OH-Gehalt* | 3,4 % | 3,8 % | 3,6 % | 3,5 % | 3,2 % | 3,1 % | 4,9 % | 5,9 % |
| Tg | 80°C | 74°C | 83°C | 79°C | 62°C | 75°C | 71°C | 96°C |
| Mw [g/mol] | 1298 | 1197 | 1296 | 1267 | - | 1232 | 1143 | 4036 |
| Mn [g/mol] | 1961 | 1653 | 1966 | 1898 | - | 1827 | 1679 | 1608 |
| Mw/Mn | 1,51 | 1,38 | 1,52 | 1,50 | - | 1,48 | 1,47 | 2,51 |

| | | | | | | | | |
|---|---|---|---|---|---|---|---|---|
| **Zeichenerklärung für die Tabelle:** * = bestimmt nach Zerewitinoff - PTEO = Phenyltriethoxysilan - MTEO = Methyltriethoxysilan - PrTEO = Propyltriethoxysilan - M2DEO = Dimethyldiethoxysilan - TES = Tetraethoxysilan - MIBK = Methylisobutylketon | | | | | | | | |

## Patentansprüche

1. Verfahren zur Herstellung von Organopolysiloxanharzen **dadurch gekennzeichnet, daß** Alkoxysilane, die gleich oder verschieden sein können, der folgenden allgemeinen Formel I:
**R**_{**x**}**Si(OR')**_{**Y**}**,**
wobei
R gleich oder verschieden sein kann und Wasserstoffatom oder organischer Rest bedeuten und R' die Bedeutung von R hat,
x 0 bis 3 und
y 4 bis 1 ist
in Gegenwart von Säure und Wasser umgesetzt werden, wobei in einem ersten Schritt der gebildete Alkohol,mit Wasser abdestilliert wird und in einer zweiten Stufe ein organisches Lösungsmittel, das einen Siedepunkt über dem des Wasser hat; hinzugefügt wird und später die Säure durch Destillation entfernt wird.

2. Organopolysiloxanharze, **dadurch gekennzeichnet, dass** sie eine Glasübergangstemperatur (Tg) von über 60 °C und einen OH-Gehalt von mindestens 1 Gew.% haben, herstellbar durch ein Verfahren nach Anspruch 1.

## Claims

1. Process for preparing organopolysiloxane resins, **characterized in that** identical or different alkoxysilanes of the following general formula I:
**R**_{**x**}**Si(OR')**_{**y**}
where
R can be identical or different and denotes hydrogen atom or organic radical and R' is as defined for R,
x is from 0 to 3, and
y is from 4 to 1,
are reacted in the presence of acid and water, the alcohol formed being distilled off with water in a first step and an organic solvent having a boiling point above that of water being added in a second stage, and subsequently the acid being removed by distillation.

2. Organopolysiloxane resins **characterized in that** they have a glass transition temperature (Tg) of more than 60°C and an OH content of at least 1% by weight, preparable by a process according to Claim 1.

## Revendications

1. Procédé pour la préparation de résines d'organopolysiloxane, **caractérisé en ce qu'**on transforme des alcoxysilanes, qui peuvent être identiques ou différents, présentant la formule générale I suivante :
RₓSi (OR')_{y},
où
R peut être identique ou différent et signifie un atome d'hydrogène ou un radical organique et R' a la signification de R
x vaut 0 à 3 et
y vaut 4 à 1
en présence d'acide et d'eau, l'alcool formé étant éliminé par distillation avec de l'eau dans une première étape et un solvant organique, présentant un point d'ébullition supérieur à celui de l'eau, étant ajouté dans une deuxième étape et l'acide étant éliminé ultérieurement par distillation.

2. Résines d'organopolysiloxane, **caractérisées en ce qu'**elles présentent une température de transition vitreuse (Tg) supérieure à 60°C et une teneur en OH d'au moins 1% en poids, pouvant être préparées par un procédé selon la revendication 1.
